# EUROPÄISCHE PATENTANMELDUNG

(11) **EP 1 232 905 A2**
(43) Veröffentlichungstag der Anmeldung: **21.08.2002**
(21) Anmeldenummer: 02003727.1
(22) Anmeldetag: 19.02.2002
(51) Int. Cl.: B60P 1/64

(54) **Verriegelungsvorrichtung für Fracht auf Fahrzeugen und seine Komponenten**

(30) Priorität: 19.02.2001 DE 10108096
(71) Anmelder: Ehring, Jürgen, 31171 Nordstemmen (DE)
(72) Erfinder: Ehring, Jürgen, 31171 Nordstemmen (DE)
(74) Vertreter: Andres, Mark (DE)

(57) **Zusammenfassung**

Erfindungsgemäß ist ein Transportsystem mit einem Ladechassis für ein Fahrzeug, insbesondere für einen LKW, mit einem Verriegelungssystem (26) zum lösbaren Befestigen von geometrisch verschieden standardisierten Transportelementen, insbesondere von Containern, auf dem Ladechassis mit Verriegelungsvorrichtungen, die an dem Ladechassis so angebracht sind, dass sie zum Bilden einer formschlüssigen Verbindung mit Halterungsprofilen im unteren Bereich der Transportelemente zusammenwirken, dadurch gekennzeichnet, dass an dem Ladechassis mindestens ein im wesentlichen horizontales Chassiselement (4), an dem eine Verriegelungsvorrichtung angebracht ist, um eine vertikale Achse (24), die zwischen zwei Ausrichtungen schwenkbar gelagert ist.

Erfindungsgemäß ist außerdem eine Verriegelungsvorrichtung für ein solches Verriegelungssystem eines Transportsystems; ein Transportelement, insbesondere ein Container mit einem Schwanenhals-Tunnel für ein solches Transportsystem sowie ein Beschlagelement für ein solches Transportelement.

## Beschreibung

Die vorliegende Erfindung betrifft ein Verriegelungssystem gemäß Anspruch 1 sowie seine Komponenten gemäß Anspruch 25, 33 und 41.

Weltweite Mobilität und weltweiter Handel haben zu einem immensen Transportstrom von Waren und Gütern geführt. Um den weltumspannenden Transport und Umschlag der transportierten Güter möglichst einfach und effizient zu gestalten, sind Systeme entwickelt worden, in denen Transportmittel und -fahrzeuge und Hilfsmittel für den Güterumschlag sowie Behälter und Halterungen für die Waren aufeinander abgestimmt sind. Ein allgegenwärtiges Beispiel für ein solches System sind Container, deren Abmessungen weltweiten Normungen unterliegen und für die es daher möglich ist, an jedem Ort der Welt auf ihre Handhabung und Lagerung eingerichtet zu sein, und für die die Konstruktion von Transport- und Handhabungsmitteln einfach und auch in Großserie sinnvoll möglich ist.

Insbesondere bei Containern, aber auch bei anderen Transportbehältern, soll einerseits das Stauvolumen möglichst groß sein, andererseits aber sind den äußeren Abmessungen z.B. aufgrund der Erfordernisse im Straßenverkehr, Grenzen gesetzt. Deshalb schreiben z.B. für Straßenverkehr zuständige Behörden Höchstmaße vor, die nicht nur für die Behälter selbst, sondern auch für die Einheit aus Behälter und tragendem Fahrzeug gelten. Dementsprechend ergibt sich für ein Verriegelungssystem, mit dem ein standardisierter Transportbehälter, insbesondere ein Container, auf einem Fahrzeugchassis zum Transport lösbar befestigt werden soll, konstruktiv die Vorgabe, in möglichst geringem Ausmaß - nach Möglichkeit überhaupt nicht -, in der Draufsicht über die Kanten des Behälters hinauszuragen. Außerdem ergibt sich aus Vorschriften über die Maximalhöhe eines beladenen Fahrzeugs sowie aus dem Bestreben, dessen Schwerpunkt möglichst niedrig anzuordnen, die konstruktive Vorgabe, durch ein Verriegelungssystem möglichst wenig zusätzliche Bauhöhe erforderlich zu machen. Ein weiterer Wunsch, der an eine Konstruktion eines solchen Verriegelungssystems stets gerichtet ist, fragt nach der Möglichkeit, mit dem Verriegelungssystem Transportbehälter nicht nur einer standardisierten Größe, sondern mehrerer verschiedener standardisierter Größen zum Transport befestigen zu können. Des weiteren soll eine solche Konstruktion nach Möglichkeit einfach und preiswert herstellbar sein. Insbesondere mit Blick auf den Straßentransport von Containern mit 20, 40 und 45 Fuß Länge ergibt sich nach europäischen Vorschriften Verbesserungsbedarf bezüglich existierender Verriegelungssysteme:

Der 45'-Container als unteilbare Ladungseinheit ist im Rahmen der gesetzlichen Vorschriften nur schwer auf einem Straßenfahrgestell unterzubringen. Die bei diesem Container-Typ völlig ausgereizten Abmessungen erlauben den Transport nur mit stirnseitig abgeschrägten Ecken und eine Verriegelungsform, die nur innerhalb des Durchdrehradius wirksam werden kann. Neben der ISO-Standardbreite von 2438 mm sind Containerbreiten bis 2600 mm zulässig. Besonders wegen der Euro-Palette wird die Containerbreite von 2550 mm bevorzugt. Damit gewinnt die 45'-Containergröße zunehmend an Beliebtheit. Die Transporteure setzen allerdings, ähnlich wie bei früheren Anschaffungen, auf universelle Fahrzeugkonstruktionen, um alle Containergrößen transportieren zu können. Das europäische Sattelkraftfahrzeug (Sättelzugmaschine und Sattelanhänger) hat den Richtlinien "96/53 EG des Rates" zu entsprechen. Das gilt insbesondere für die gesetzliche Gesamtlänge des Sattelzuges, aber auch für die Gewichte und Kurvenlaufeigenschaften. Die konstruktiven Lösungen haben ferner die besondere Baumaßnahmen für Container nach ISO-Norm zu berücksichtigen.

ISO-Container unterschiedlicher Länge auf einem Straßenfahrzeug zu transportieren, ist bekannt; Container und Fahrzeug werden durch Twist Locks (Verriegelungen) oder Bolzen-Sicherungen fest miteinander verbunden.

Der Transport von 40'- oder 45'-ISO-Containern mit Goosenecktunnel stellt besondere Anforderungen an die Rahmenkonstruktion des Anhängers. Hierbei ist es erforderlich, den vorderen Rahmenteil in Tunnelhöhe zu kröpfen, damit zum einen die Schwerpunkthöhe des kompletten Zuges abgesenkt wird und zum anderen die Ladehöhe des Containers um den Stufensprung vergrößert werden kann. Die Rahmenbreite wird im vorderen Bereich so weit verjüngt, dass die Längsträger innerhalb der Tunnelbreite liegen und so den Container auf ganzer Tunnellänge abstützen.

Beide Containerlängen (40' und 45') werden nach dem Stand der Technik stirnseitig gesichert. Der 40'-Container erhält seine Sicherung durch einen horizontalen Steckverschluss außen in den ISO-Eckbeschlägen, der 45'-Container durch eine Sonderkonstruktion im mittleren Bereich der Stirnwand.

Der Erfindung liegt demgegenüber die Aufgabe zugrunde, ein Transportsystem mit einem Verriegelungssystem sowie die dazu erforderlichen Komponenten zu schaffen, deren Konstruktion und Handhabung vereinfacht ist.

Diese Aufgabe wird erfindungsgemäß von einem Transportsystem gemäß Anspruch 1, einer Verriegelungsvorrichtung gemäß Anspruch 31, einem Transportelement gemäß Anspruch 39 und einem Beschlagelement gemäß Anspruch 47 gelöst. Bevorzugte Ausgestaltungen der Erfindung sind in den Unteransprüchen angegeben.

Das erfindungsgemäße Transportsystem weist ein Ladechassis für ein Fahrzeug, insbesondere ein Sattelanhängerfahrgestell für einen LKW, auf. Das Ladechassis ist mit einem Verriegelungssystem zum lösbaren Befestigen von geometrisch verschieden standardisierten Transportelementen ausgestattet. Unter dem Begriff "geometrisch standardisierte Transportelemente" sollen jedwede Transportgegenstände umfasst sein, deren äußere Abmessungen mindestens teilweise standardisiert - insbesondere genormt - sind. Dies ermöglicht es, das erfindunsgemäße Transportsystem geometrisch so abzustimmen (was im folgenden im einzelnen beschrieben wird), dass es für den Transport - und insbesondere auch die Sicherung für den Transport auf dem Transportfahrzeug - eingerichtet ist. Erfindungsgemäß lassen sich nun aber sogar geometrisch "verschieden" standardisierte Transportelemente lösbar auf dem Ladechassis mittels des Verriegelungssystems befestigen, d.h., das Transportsystem ist nicht nur auf ein standardisiertes Transportelement oder auf einen Standard eines Transportelementes eingerichtet, sondern mindestens auf zwei. Zur Befestigung der Transportelemente auf dem Ladechassis weist das Transportsystem Verriegelungsvorrichtungen auf, die an dem Ladechassis so angebracht sind, dass sie entsprechend den geometrischen Standards mit Halterungsprofilen - z.B. Bohrungen, Ösen, Hinterschnitten, Stiften oder auch aufwendigeren Profilierungen wie z.B. Containerecken - im unteren Bereich - vorzugsweise im Randbereich eines ebenen Bodens des aufgeladenen Transportelements zusammenwirken können, eine formschlüssige Verbindung herzustellen. Zum Anpassen des Transportsystems an die mindestens zwei verschiedenen geometrischen Standards der Transportelemente, die mit dem Transportsystem transportiert werden sollen, weist dieses mindestens ein, vorzugsweise zwei, im wesentlichen horizontale Chassiselemente auf, an denen jeweils mindestens eine der Verriegelungsvorrichtungen des Verriegelungssystems angebracht sind und die jeweils um eine vertikale Achse zwischen zwei Ausrichtungen schwenkbar gelagert sind. Und dabei ist das Transportsystem in einer der zwei Ausrichtungen dann für mindestens einen ersten der verschiedenen geometrischen Standards eingerichtet und in der zweiten Ausrichtung für mindestens einen zweiten. Auch weitere Ausrichtungen für weitere geometrische Standards sind erfindungsgemäß.

In einer besonders bevorzugten Ausgestaltung der Erfindung als Sattelanhängerfahrgestell für eine Sattelzugmaschine zum Transport von Containern der geometrischen Standards der Längen 45 Fuß, 40 Fuß und/oder 20 Fuß Länge sind zwei horizontale Chassiselemente als Ausleger im vorderen Teil des Fahrgestellrahmens am Ladechassis so angelenkt - und zwar in Querrichtung des Ladechassis betrachtet in einem mittleren Bereich unterhalb des sogenannten "Goose-Neck"-Tunnels eines darauf geladenen 45-Fuß-Containers -, dass die beiden Ausleger - in Längsrichtung des Sattelanhängerfahrgestells symmetrisch zueinander - in der einen Ausrichtung flügelartig quer zur Fahrtrichtung des Sattelanhängers geschwenkt sind, und in der zweiten Ausrichtung in Längs- oder Fahrtrichtung des Anhängers, also im wesentlichen parallel zueinander nach vorn. Die Verriegelungsvorrichtungen der schwenkbaren Chassiselemente (die später im einzelnen beschrieben werden), sind vorzugsweise an den Enden der Chassiselemente angeordnet, während die Schwenkachsen sich an den gegenüberliegenden Enden der länglichen Chassiselemente befinden. Im beschriebenen Beispiel passen die in Fahrtrichtung geschwenkten Ausleger in den Goose-Neck-Tunnel eines auf dem Ladechassis abgesetzten 45-Fuß-Containers. Vorzugsweise verriegeln dann die Verriegelungsvorrichtungen seitlich (also quer zur Fahrtrichtung) mittels horizontal verschieblicher Bolzen in eine Wandung des Goose-Neck-Tunnels, wo dann vorzugsweise eine passende Bohrung als Halterungsprofil an dem entsprechend standardisierten 45-Fuß-Container angeordnet ist. Besonders bevorzugt ist dann weiterhin, dass die Verriegelungsvorrichtungen an den schwenkbaren Chassiselementen in der quer zur Fahrtrichtung des Ladechassis geschwenkten Ausrichtung Container nach einem zweiten geometrischen Standard verriegeln können, und zwar insbesondere Container von 40 Fuß Länge, die dann auf dem Sattelanhänger mit in Fahrtrichtung horizontal verschieblichen Bolzen in einer stirnseitigen Wandung des Containers und dort vorzugsweise in der Bohrung der üblichen Containerecke als Halterungsprofil verriegelt werden können.

Aufgrund von insbesondere europäischen Vorgaben für den Straßenverkehr bezüglich der Gesamtlänge eines beladenen Fahrzeugs war es mit den bekannten Transport- und Verriegelungssystemen beinahe nur mit Sondergenehmigungen möglich, 45-Fuß-Container auf der Straße zu transportieren. Die einfach ausgestaltete Verstellmechanik in Form von schwenkbaren Chassiselementen zur Anpassung zwischen den beiden besonders häufig transportierten Containergrößen 40 Fuß und 45 Fuß ist also nur einer der Vorteile des erfindungsgemäßen Systems und kann ergänzt sein durch den zusätzlichen Vorteil, durch die Verriegelung des 45-Fuß-Containers innerhalb des Goose-Neck-Tunnels als einer bevorzugten Ausgestaltung der Erfindung die Verriegelungsmechanik in der Draufsicht kaum unterhalb des Containers nach vorn über die Außenkontur des Containers hinaustreten zu lassen und dadurch die Gesamtlänge des Fahrzeugs nicht über das erlaubte Maß hinaus zu vergrößern - was bei den bekannten Transport- und Verriegelungssystemen der Fall ist, die daher in aller Regel bei entsprechenden Vorschriften eine Sondergenehmigung benötigen.

Ganz besonders bevorzugt ist weiterhin, in der Querausrichtung der schwenkbaren Chassiselemente auf dem Sattelanhänger auch 20-Fuß-Container verriegeln zu können, und zwar mittels Bajonettzapfen, die um eine vertikale Achse verdrehbar sind, als Verriegelungsvorrichtung an dem Chassiselement, die dann den aufgeladenen Container unterseitig in den jeweiligen Bohrungen der Containerecken als Halterungsprofile verriegeln. Diese besonders bevorzugte Möglichkeit, erfindungsgemäß sowohl 45-Fuß- als auch 40-Fuß- und 20-Fuß-Container, wie beschrieben, erfindungsgemäß zu verriegeln, ist im Container-Transportgeschäft besonders häufig gefragt. Dabei resultiert die Notwendigkeit der Verriegelung des 40-Fuß-Containers stirnseitig gegenüber der Verriegelung des 20-Fuß-Containers unterseitig daraus, dass zwei 20-Fuß-Container zwar auf dem Sattelanhänger im wesentlichen dieselbe Länge einnehmen wie ein 40-Fuß-Container, letzter hat jedoch, wie einleitend beschrieben, in seiner Unterseite den bekannten Goose-Neck-Tunnel zum Ausgleich des Versprungs der Höhe der Ladefläche im Bereich der "Deichsel" des Sattelanhängers, so dass ein 40-Fuß-Container auch in Fahrtrichtung vorne auf dem Sattelanhänger eine Höhe einnimmt und in dieser Höhe zu verriegeln ist, die der Höhe des hinteren (Haupt-)Bereichs der Ladefläche entspricht. Demgegenüber weisen 20-Fuß-Container solche Goose-Neck-Tunnel in aller Regel nicht auf, so dass zwar ein hinten auf einem Sattelanhänger geladener 20-Fuß-Container in derselben Höhe verriegelt wird wie der 40-Fuß-Container, der vorn aufgeladene 20-Fuß-Container dagegen sitzt auf der Höhe der "Deichsel" auf und ist daher um diesen Höhenversprung weiter oben angeordnet und eben dort zu verriegeln. Dies wird auch in der Figurenbeschreibung deutlich. Besonders bevorzugt ist jedenfalls ein Transportsystem, bei dem Chassiselemente die Verriegelungsvorrichtungen zum Verriegeln von Transportelementen der drei geometrischen Standards von 45 Fuß, 40 Fuß und 20 Fuß aufweisen, und in die Positionen, die diese Container beim Absetzen auf dem Ladechassis einnehmen, schwenkbar sind.

Nochmals allgemeiner beschrieben und mit weniger starker Betonung auf den Transport von Containern gerichtet ist das schwenkbare Chassiselement vorzugsweise länglich und bezüglich der Fahrtrichtung des Ladechassis zwischen einer Längsausrichtung und einer Querausrichtung schwenkbar. Die Anpassung an die verschiedenen geometrischen Standards der zu transportierenden Transportelemente geschieht vorzugsweise dadurch, dass der Abstand zwischen der mindestens einen Verriegelungsvorrichtung an dem schwenkbaren Chassiselement und mindestens einer weiteren Verriegelungsvorrichtung, die an dem Ladechassis angebracht ist, einem ersten Standardmaß für den Abstand von Halterungsprofilen den zu transportierenden Transportelementen entspricht, wenn das Chassiselement in die erste Ausrichtung geschwenkt ist, und einem zweiten Standardmaß, wenn das Chassiselement in die zweite Ausrichtung geschwenkt ist. Erfindungsgemäß ist das Transportsystem aber auch durch die wahlweise Betätigung von mehreren Verriegelungsvorrichtungen an dem Chassiselement anpassbar an die zu transportierenden Transportelemente der verschiedenen geometrischen Standards, was erkennbar ist an dem beschriebenen Beispiel der Verriegelung eines 20-Fuß-Containers mittels des Bajonettzapfens gegenüber der Verriegelung des 40-Fuß-Containers mittels des horizontal verschieblichen Bolzens jeweils (also beide) in der beschriebenen Querausrichtung des schwenkbaren Chassiselementes.

Wie schon in dem Beispiel des Sattelanhänger-Systems beschrieben, hat das erfindungsgemäße Transportsystem auch ganz allgemein vorzugsweise eine Verriegelungsvorrichtung an dem schwenkbaren Chassiselement mit mindestens einem ersten und einem zweiten Riegelelement. Bei dem genannten Beispiel handelt es sich um drei Riegelelemente, nämlich zwei horizontal verschiebliche Bolzen - einmal für den 45-Fuß-Container und einem für den 40-Fuß-Container sowie um den Bajonett-Drehzapfen für den 20-Fuß-Container -, die alle zwischen einer Verriegelungsposition zum Herstellen der formschlüssigen Verbindung und einer Freigabeposition zum Be- und Entladen bewegbar sind - und zwar vorzugsweise mittels eines gemeinsamen Antriebs, der einen Handhebel und/oder einen automatischen, vorzugsweise pneumatischen Antrieb aufweisen kann. Ein pneumatischer Antrieb ist besonders bevorzugt für eine schnelle und gleichzeitige Betätigung aller Verriegelungsvorrichtungen des Transportsytems, um Beladung und Verriegelung zu ermöglichen, ohne dass ein Arbeiter während dieser Vorgänge sich in dem Gefahrenbereich des Ladechassis aufhalten muss.

Diese Merkmale der Verriegelungsvorrichtung sind erfindungsgemäß wie beschrieben sowohl für das Transportsystem als auch für eine erfindungsgemäße Verriegelungsvorrichtung für ein solches Transportsystem, bei der mindestens ein erstes Riegelelement als in seiner Längsrichtung verschieblicher erster Bolzen ausgestaltet ist sowie mindestens ein zweites Riegelelement als ein um seine vertikale Achse verdrehbarer Bajonettzapfen, wobei der Bajonettzapfen des Bauteils vollständig oberhalb des Bolzens angeordnet ist. Dies hat die Vorzüge des besonders einfachen Aufbaus und der besonders geringen Baugröße, und zwar insbesondere dann, wenn die vertikale Achse des Bajonettzapfens als gedachte Verlängerung durch den in Längsrichtung verschieblichen Bolzen hindurchgeht (also sozusagen "unmittelbar über" dem Bolzen angeordnet ist).

Besonders bevorzugt gerade mit Blick auf seine Verwendung in einem Transportsystem nach dem oben beschriebenen Beispiel für die Verriegelung von 45-Fuß-, 40-Fuß- und 20-Fuß-Containern ist eine Verriegelungsvorrichtung, die zusätzlich ein drittes Riegelelement aufweist in Gestalt eines horizontal in seiner Längsrichtung verschieblichen zweiten Bolzens, wobei die Längsrichtungen, in denen der erste und der zweite Bolzen verschieblich sind, vorzugsweise parallel zueinander verlaufen. Der erste und der zweite Bolzen lassen sich vorzugsweise einzeln und/oder gleichzeitig in ihrer Freigabeposition in ein Gehäuse einfahren und vorzugsweise einzeln und/oder gleichzeitig in ihre Verriegelungsposition ausfahren. Der Antrieb der Bolzen erfolgt vorzugsweise durch einen T-förmigen Hebel, dessen Querbalkenenden an den Bolzen angelenkt sind, während der Antrieb an dem Längsbalken des T-förmigen Hebels ansetzt. Eines der Querbalkenenden betätigt dann gleichzeitig, z.B. mittels eines Kulissenschiebers oder Nockens, auch die Verdrehung des Bajonettzapfens, der dann vorzugsweise direkt über dem Bolzen angeordnet ist.

Diese beschriebenen Merkmale der Verriegelungsvorrichtung für ein Transportsystem sind gleichermaßen erfindungsgemäß für die eingangs beschriebene Verriegelungsvorrichtung des Transportsystems.

Entsprechend dem eingangs beschriebenen, besonders bevorzugten Beispiel eines Transportsystems ist auch ein Transportelement, insbesondere ein Container, mit einer länglichen, tunnelartigen, geometrisch standardisierten Ausnehmung, insbesondere einem Goose-Neck-Tunnel, in der Unterseite erfindungsgemäß, bei dem mindestens ein Halterungsprofil im Bereich dertunnelartigen Ausnehmung angeordnet ist. Das Halterungsprofil weist vorzugsweise mindestens eine horizontale, vorzugsweise quer zur Längsrichtung des Tunnels verlaufende Bohrung auf, die vorzugsweise in einer Verstärkung der Tunnelwandung ausgebildet ist.

Besonders bevorzugt ist die Anordnung des Halterungsprofils in einem vorgefertigten Beschlag, so dass auch herkömmliche, bislang nicht erfindungsgemäß mit einem Halterungsprofil im Bereich der tunnelartigen Ausnehmung ausgestattete Transportelemente sich erfindungsgemäß nachrüsten oder auch besonders einfach erfindungsgemäß ausrüsten lassen. Der Beschlag ist vorzugsweise für eine Ecke zwischen der Unterseite und einer Stirnseite des Transportelementes sowie einer Tunnelseitenwand an einem Eingang des Tunnels in der Stirnseite ausgebildet. Auf dieser Ecke ist der Beschlag besonders einfach reproduzierbar zu positionieren und zu befestigen und kann auch noch ein stirnseitiges Halterungsprofil, z.B. eine Bohrung aufweisen, um auch dort für ein Transportsystem ein Halterungsprofil bereitzustellen.

Damit sich der Eckbeschlag sowohl linksseitig als auch rechtsseitig am Eingang des Tunnels einsetzen lässt, hat er vorzugsweise in der dem stirnseitigen Halterungsprofil gegenüberliegenden Seite ein entsprechendes Halterungsprofil für spiegelverkehrten Einsatz links und rechts.

Erfindungsgemäß ist das beschriebene Beschlagelement des erfindungsgemäßen Transportelementes auch als separates Beschlagelement für ein solches Transportelement eines Transportsystems. Erfindungsgemäß ist weiterhin auch das Transportsystem mit mindestens zweien solcher Transportelemente, die geometrisch verschieden standardisiert sind.

Alle beschriebenen Elemente und Systemzusammenhänge können vorzugsweise insbesondere bezüglich ihrer Abmessungen ISO, DIN oder irgendeinem anderen Normensystem entsprechen.

Die vorliegende Erfindung wird im folgenden mit Bezug auf die beigefügten Zeichnungen beschrieben.
- Figur 1: zeigt eine Seitenansicht eines erfindungsgemäßen Sattelanhängerfahrgestells,
- Figur 2: zeigt eine Draufsicht auf das Sattelanhängerfahrgestell gemäß Figur 1,
- Figur 3: zeigt eine Draufsicht auf den in Fahrtrichtung vorderen Teil des Sattelanhängerfahrgestells gemäß Figur 1 und 2,
- Figur 4: zeigt eine Vorderansicht des Sattelanhängerfahrgestells gemäß Figur 1 bis 3 mit seitlich geschwenkten Chassiselementen,
- Figur 5: zeigt die Ansicht gemäß Figur 4 im Bereich des Goose-Neck-Tunnels mit in Längsrichtung geschwenkten Chassiselementen,
- Figuren 6 bis 8: zeigen eine erfindungsgemäße Verriegelungsvorrichtung in den teilweise geschnittenen drei Ansichten, und
- Figuren 9 bis 11: zeigen eine alternative Ausgestaltung einer erfindungsgemäßen Verriegelungsvorrichtung in den teilweise geschnittenen drei Ansichten.

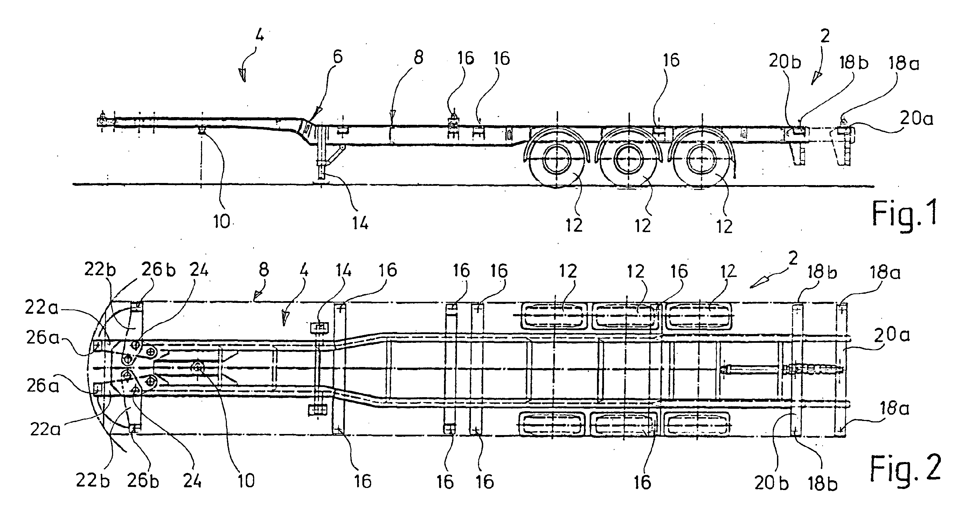

In der Seitenansicht eines Sattelanhängerfahrgestells 2 ist in Fahrtrichtung (in Figur 1 nach links) der Goose-Neck - sozusagen die "Deichsel" - 4 mit ihrem Höhenversprung 6 der Ladefläche 8 erkennbar. Der Goose-Neck 4 wird mit einem Königszapfen 10 als Verbindungselement auf einen Sattelschlepper (nicht dargestellt) aufgesetzt. In der Darstellung gemäß Figur 1 steht der Sattelanhänger auf seinen Rädern 12 im hinteren Bereich sowie auf einer Stütze 14 im vorderen Bereich.

Auch in der Draufsicht gemäß Figur 2 sind die beschriebenen Strukturen erkennbar. Erkennbar sowohl in Figur 1 als auch in Figur 2 sind Verriegelungsvorrichtungen 16 an verschiedenen Positionen im Seitenkantenbereich der Ladefläche 8 über die Länge des Sattelanhängerfahrgestells verteilt. Die zwei Verriegelungsvorrichtungen 18 auf den beiden hinteren Ecken der Ladefläche 8 sind an einem Träger 20 teleskopisch gegen die Fahrtrichtung ausfahrbar (was in den zwei Positionen a und b dargestellt ist). Ganz vorne in Fahrtrichtung am Fahrgestell 2 sind am vorderen Ende des Goose-Neck 4 zwei im wesentlichen horizontale Chassiselemente 22 um eine vertikale Achse 24 zwischen zwei Ausrichtungen a und b schwenkbar gelagert. Diese schwenkbaren Ausleger 22 tragen im Bereich ihrer äußeren Enden, die den Enden mit der Schwenkachse 24 gegenüberliegen, jeweils eine Verriegelungsvorrichtung 26.

Die Ausleger 22 lassen sich zwischen der Längsausrichtung a, in der die Ausleger 22a in Verlängerung der den Goose-Neck 4 bildenden Träger verlaufen, und der Querausrichtung b, in der sie flügelartig quer zur Fahrtrichtung geschwenkt sind, so dass die Verriegelungsvorrichtungen 26b im Randbereich der Ladefläche 8 positioniert sind, z.B. pneumatisch, aber auch manuell verschwenken.

Durch die Einstellbarkeit des Trägers 20 am Ende des Sattelanhängerfahrgestells und der Ausleger 22 am Kopf des Fahrgestells 2 lassen sich auf dem Sattelanhängerfahrgestell 2 unter anderem Container sowohl von 40 Fuß Länge (in der eingefahrenen Position des Trägers 20b und in der Querausrichtung der Ausleger 22b) als auch 45-Fuß-Container (in der ausgefahrenen Position des Trägers 20a und in der Längsausrichtung der Ausleger 22a) transportieren und auf dem Fahrgestell 2 verriegeln.

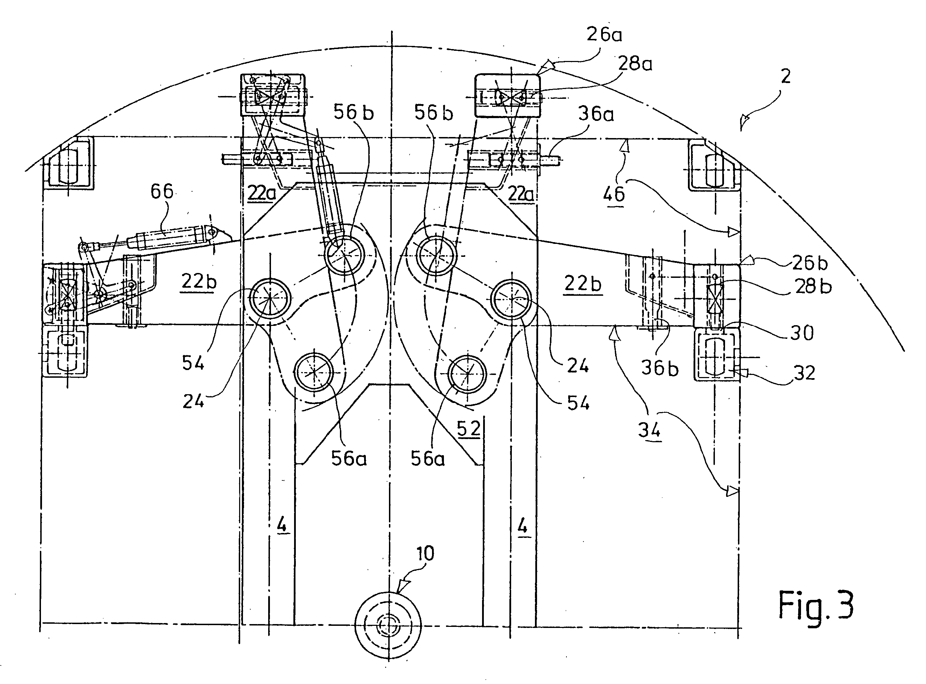

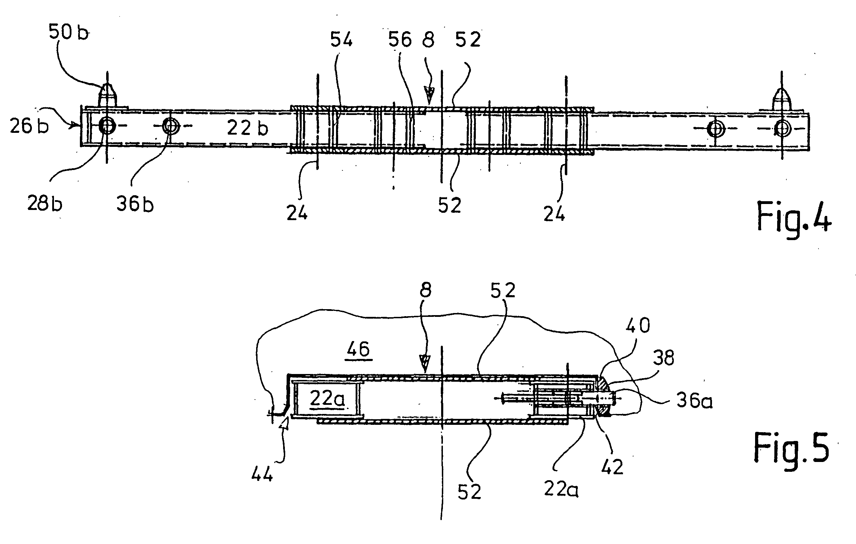

Die beschriebenen Strukturen im Bereich des Kopfes des Sattelanhängerfahrgestells 2 sind vergrößert in Figur 3 erkennbar. Hier wird nun deutlich, wie in der Querausrichtung des Auslegers 22b ein in seiner Längsrichtung verschieblicher Bolzen 28 der Verriegelungsvorrichtung 26 in der Position 26b in eine stirnseitige Bohrung 30 in einer Containerecke 32 eines 40-Fuß-Containers 34 sich in Fahrtrichtung einführen lässt, um so den 40-Fuß-Container 34 stirnseitig zu verriegeln. In der Längsausrichtung des Auslegers 22a ist zusammen mit Figur 5 erkennbar (wo diese Position 22a in der Vorderansicht dargestellt ist), dass ein zweiter, ebenfalls in seiner Längsrichtung verschieblicher Bolzen 36 in eine Bohrung 38 in einer Verstärkung 40 in einer Seitenwand 42 eines Goose-Neck-Tunnels 44 eines 45-Fuß-Containers 46 zur Verriegelung quer zur Fahrtrichtung eingeführt ist. Figur 4 zeigt demgegenüber die Querausrichtung des Auslegers 22b, in der in dieser Ansicht die parallel zueinander in ihrer Längsrichtung verschieblichen Bolzen 28 und 36 ebenso erkennbar sind wie ein um seine vertikale Achse 48 drehbarer Bajonettzapfen 50 direkt über dem Bolzen 28. Die parallele Ausrichung der Bolzen 28 und 36 ist auch in Figur 3 in den Ausrichtungen a und b jeweils deutlich erkennbar.

Mit Blick auf Figur 3 und Figur 4 wird außerdem die einfache und äußerst wirkungsvolle Ausgestaltung des Schwenkmechanismus der Ausleger 22 um die vertikale Achse 24 deutlich. Die Schwenkachse 24 ist als einfache Gleitlagerhülse 54 zwischen zwei horizontalen parallelen Stahlplatten 52, die oberseitig und unterseitig an den Goose-Neck-Trägern 4 angebracht sind, ausgebildet. Insbesondere auch um das Biegemoment, das von einem aufgeladenen Container auf die Ausleger 22 einwirkt, nicht allein von dem Gleitlager 54 der vertikalen Achse 24 abstützen zu lassen, ist auf der der Verriegelungsvorrichtung 26 gegenüberliegenden Seite des Gleitlagers 54 eine Stützhülse 56 als vertikaler Rohrabschnitt der Länge der Innenweite zwischen den Stahlplatten 52 in dem Ausleger 22 angeordnet, die innenseitig zwischen den parallelen Stahlplatten 52 anliegt und sich dort abstützt.

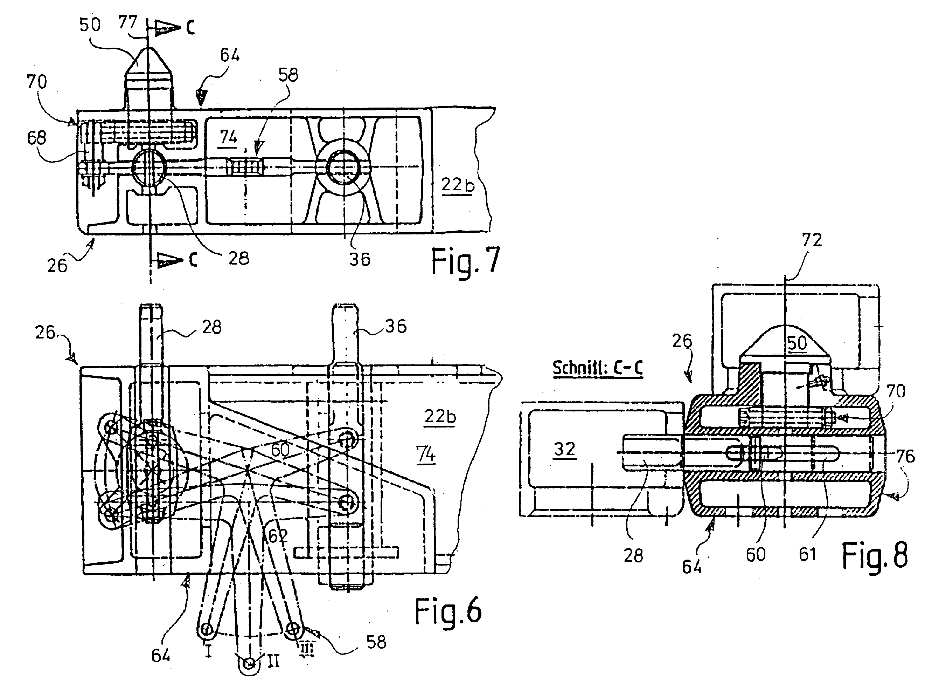

Mit Blick auf Figur 3 und genauer Figur 6 bis 8 ist nun die Ausgestaltung der Verriegelungsvorrichtung 26 erkennbar. In drei Ansichten (Draufsicht Figur 3 und 6, Vorderansicht bei Querausrichtung des Auslegers 22b Figur 7 und Seitenansicht bei derselben Ausrichtung Figur 8) ist erkennbar, dass die beiden parallel zueinander in ihrer Längsrichtung verschieblichen Bolzen 28 von einem T-förmigen Hebel 58 betätigt sind. Dessen Querbalken 60 ist mit seinen Enden jeweils in einem Langloch 61 in dem Bolzen 28, 36 gelenkig gelagert (zum Längenausgleich mit einem Stift in einem Langloch (nicht dargestellt)), während der Längsbalken 62 des T-förmigen Hebels 58 zur Betätigung aus einem Gehäuse 64 ragt, in dem die Verriegelungsvorrichtung 26 angeordnet ist. An seinem Längsbalken 62 lässt sich der T-förmige Hebel 58 dann entweder von Hand betätigen oder mittels eines Pneumatikzylinders 66 (Figur 3) antreiben.

Das in Figur 6 rechte Ende 66 des Querbalkens 60 ist unmittelbar in dem Langloch 61 des Bolzens 36 angelenkt, während das linke Ende des Querbalkens 60 über die Anlenkung an den Bolzen 28 hinaus durch das Langloch 61 des Bolzens 28 durchführt, um mit diesem linken Ende des Querbalkens 60 über einen Stift 68 (siehe besonders Figur 7) in einen Nocken 70 zu greifen, der den Bajonettdrehzapfen 50 antreibt. Der Bajonettzapfen 50 ist um seine vertikale Achse 72 drehbar in dem Gehäuse 64 vollständig oberhalb des Bolzens 28 gelagert, wobei die Drehachse 72 des Zapfens 50 durch den Bolzen 28 hindurchführt. Diese Ausgestaltung ist erfindungsgemäß vorteilhaft besonders einfach und besonders raumsparend.

In dem Gehäuse 64 befinden sich Hohlräume 74, in denen sich Steuerventile und/oder Steuerelektronik (nicht dargestellt) geschützt unterbringen lassen, die z.B. für die Versorgung von automatischen Betätigungsvorrichtungen (z.B. 66) erforderlich sein können. Außerdem ist in Figur 8 erkennbar, dass die Außenkontur 76 des Gehäuses 64 ballig ausgebildet ist. Dies hat den vorteilhaften Effekt einer gewissen Selbstzentrierung, wenn z.B. ein 45-Fuß-Container mit seinem Goose-Neck-Tunnel über die Verriegelungsvorrichtung 28 gesetzt wird.

In der dargestellten Ausgestaltung der Verriegelungsvorrichtung 26 bewirkt die Position I des T-förmigen Hebels, dass der Bolzen 28 in Verriegelungsposition ausgefahren und der Bolzen 36 in Freigabeposition eingefahren ist, Position II, dass beide Bolzen 28, 36 in Freigabeposition eingefahren sin,d und Position III, dass der Bolzen 28 in Freigabeposition eingefahren und der Bolzen 36 in Verriegelungsposition ausgefahren ist.

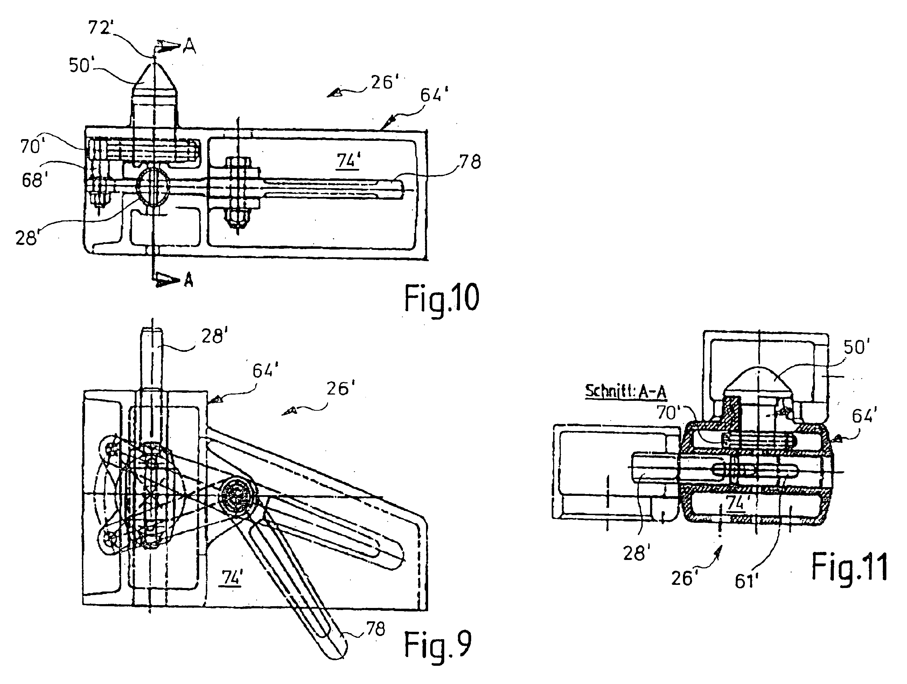

Eine etwas einfacher aufgebaute Verriegelungsvorrichtung - nämlich ohne den Bolzen 36 und daher von einem einfachen Pendelhebel 78 betätigt - ist in Figur 9 bis 11 dargestellt. Im übrigen entsprechen sich die Elemente aber (die gleichen Bezugsziffern der entsprechenden Elemente sind dort daher zur Unterscheidung mit ' gekennzeichnet).

## Patentansprüche

1. Transportsystem mit einem Ladechassis für ein Fahrzeug, insbesondere für einen LKW, mit einem Verriegelungssystem zum lösbaren Befestigen von geometrisch verschieden standardisierten Transportelementen, insbesondere von Containern, auf dem Ladechassis mit Verriegelungsvorrichtungen, die an dem Ladechassis so angebracht sind, dass sie zum Bilden einer formschlüssigen Verbindung mit Halterungsprofilen im unteren Bereich der Transportelemente zusammenwirken,
**dadurch gekennzeichnet, dass** an dem Ladechassis mindestens ein Chassiselement, an dem eine Verriegelungsvorrichtung angebracht ist, um eine vertikale Achse zwischen zwei Ausrichtungen schwenkbar gelagert ist.

2. System nach Anspruch 1,
**dadurch gekennzeichnet, dass** das Chassiselement länglich und bezüglich der Fahrtrichtung des Chassis zwischen einer Längsausrichtung und einer Querausrichtung schwenkbar ist.

3. System nach Anspruch 2,
**dadurch gekennzeichnet, dass** der Abstand zwischen den Verriegelungsvorrichtungen in einer Ausrichtung des Chassiselementes einem ersten Standardmaß für den' Abstand von Halterungsprofilen entspricht und in der zweiten Ausrichtung einem zweiten Standardmaß für den Abstand von Halterungsprofilen.

4. System nach einem der vorhergehenden Ansprüche,
**dadurch gekennzeichnet, dass** die Verriegelungsvorrichtung an einem Ende des Chassiselementes und die Lagerung um die vertikale Achse an dem anderen Ende des Chassiselementes angeordnet ist.

5. System nach einem der vorhergehenden Ansprüche,
**dadurch gekennzeichnet, dass** die Verriegelungsvorrichtung mindestens ein erstes und ein zweites Riegelelement aufweist, die zum Herstellen der formschlüssigen Verbindung zwischen einer Verriegelungsposition und einer Freigabeposition bewegbar sind.

6. System nach Anspruch 5,
**dadurch gekennzeichnet, dass** mindestens das erste und das zweite Riegelelement mittels eines gemeinsamen Antriebs betätigbar sind.

7. System nach Anspruch 6,
**dadurch gekennzeichnet, dass** der Antrieb einen Handhebel aufweist.

8. System nach einem der Ansprüche 6 oder 7,
**dadurch gekennzeichnet, dass** der Antrieb pneumatisch ist.

9. System nach einem der Ansprüche 6 bis 8,
**dadurch gekennzeichnet, dass** das erste Riegelelement einen horizontal in seiner Längsrichtung verschieblichen ersten Bolzen aufweist und das zweite Riegelelement einen um seine vertikale Achse verdrehbaren Bajonettzapfen.

10. System nach Anspruch 9,
**dadurch gekennzeichnet, dass** der erste Bolzen quer zu der Längsrichtung des Chassiselementes verschieblich ist.

11. System nach einem der Ansprüche 9 oder 10,
**dadurch gekennzeichnet, dass** der Bajonettzapfen oberhalb des Bolzens angeordnet ist.

12. System nach einem der Ansprüche 9 bis 11,
**dadurch gekennzeichnet, dass** die Verriegelungsvorrichtung ein drittes Riegelelement aufweist in Gestalt eines horizontal in seiner Längsrichtung verschieblichen Bolzens.

13. System nach Anspruch 12,
**dadurch gekennzeichnet, dass** die Bolzen in ihren Längsrichtungen parallel zueinander verlaufen.

14. System nach einem der Ansprüche 12 oder 13,
**dadurch gekennzeichnet, dass** sich die Bolzen gleichzeitig in eine Freigabeposition in ein Gehäuse einfahren lassen.

15. System nach einem der Ansprüche 12 bis 14,
**dadurch gekennzeichnet, dass** die Bolzen mittels eines T-förmigen Hebels betätigbar sind.

16. System nach einem der vorhergehenden Ansprüche,
**dadurch gekennzeichnet, dass** das Ladechassis ein Sattelanhängerfahrgestell ist zum Transport von Containern, insbesondere von 45', 40' und/oder 20' Länge.

17. System nach einem der vorhergehenden Ansprüche,
**dadurch gekennzeichnet, dass** zwei schwenkbare Ausleger im vorderen Teil des Fahrgestellrahmens die Chassiselemente bilden.

18. System nach einem der vorhergehenden Ansprüche,
**dadurch gekennzeichnet, dass** das Chassis so eingerichtet ist, dass die Verriegelungsvorrichtungen der in Fahrtrichtung des Ladechassis geschwenkten Chassiselemente Transportelemente nach einem ersten geometrischen Standard, insbesondere Container von 45' Länge, auf dem Chassis mit horizontal verschieblichen Bolzen in einer Wandung des Goose-Neck-Tunnels des Containers verriegeln.

19. System nach einem der vorhergehenden Ansprüche,
**dadurch gekennzeichnet, dass** das Chassis so eingerichtet ist, dass die Verriegelungsvorrichtungen der quer zur Fahrtrichtung des Ladechassis geschwenkten Chassiselemente Transportelemente nach einem zweiten geometrischen Standard, insbesondere Container von 40' Länge, auf dem Chassis mit horizontal verschieblichen Bolzen in einer stirnseitigen Wandung des Containers verriegeln.

20. System nach einem der vorhergehenden Ansprüche,
**dadurch gekennzeichnet, dass** das Chassis so eingerichtet ist, dass die Verriegelungsvorrichtungen der quer zur Fahrtrichtung des Ladechassis geschwenkten Chassiselemente Transportelemente nach einem dritten geometrischen Standard, inbesondere Container von 20' Länge, auf dem Chassis mit Bajonettzapfen, die um eine vertikale Achse verdrehbar sind, in einem Eckbereich an der Unterseite des Containers verriegeln.

21. System nach einem der Ansprüche 18 bis 20,
**dadurch gekennzeichnet, dass** die Chassiselemente die Verriegelungsvorrichtungen zum Verriegeln von Containern nach-allen drei geometrischen Standards aufweisen.

22. System nach einem der vorhergehenden Ansprüche,
**dadurch gekennzeichnet, dass** mindestens ein Abschnitt einer vertikalen Längsseite der Chassiselemente eine ballige Außenseite aufweist.

23. System nach einem der vorhergehenden Ansprüche mit mindestens zwei geometrisch verschieden standardisierten Transportelementen, insbesondere Containern, mit einer länglichen, tunnelartigen Ausnehmung, insbesondere einem Schwanenhals-Tunnel, in der Unterseite,
**dadurch gekennzeichnet, dass** Halterungsprofile im Bereich der tunnelartigen Ausnehmung angeordnet sind und
dass zwei längliche Chassiselemente in eine Längsausrichtung schwenkbar sind, in der sie in die Ausnehmung passen und dass die Verriegelungsvorrichtungen an den Chassiselementen mit den Halterungsprofilen in der Ausnehmung zusammenwirken.

24. System nach Anspruch 23,
**dadurch gekennzeichnet, dass** die Halterungsprofile im Bereich der tunnelartigen Ausnehmung horizontale Bohrungen aufweisen und dass die Verriegelungsvorrichtungen horizontal in ihre Längsrichtung verschiebliche Bolzen aufweisen und dass die Verriegelungsvorrichtungen in die Bohrungen passen.

25. System nach Anspruch 24,
**dadurch gekennzeichnet, dass** die Bohrungen in einer Verstärkung der Tunnelwandung ausgebildet sind.

26. System nach einem der Ansprüche 24 oder 25,
**dadurch gekennzeichnet, dass** die Bohrungen quer zur Längsrichtung des Tunnels verlaufen.

27. System nach einem der Ansprüche 24 bis 26,
**dadurch gekennzeichnet, dass** mindestens eine der Bohrungen in einem vorgefertigten Beschlag ausgebildet ist.

28. System nach Anspruch 27,
**dadurch gekennzeichnet, dass** der Beschlag für eine Ecke zwischen der Unterseite und einer Stirnseite des Transportelementes und/oder -gutes sowie einer Tunnelseitenwand an einem Eingang des Tunnels ausgebildet ist mit einer stirnseitigen Bohrung in Längsrichtung des Tunnels.

29. System nach Anspruch 28,
**dadurch gekennzeichnet, dass** der Eckbeschlag unmontiert eine mit der stirnseitigen Bohrung fluchtende zweite Bohrung in Längsrichtung des Tunnels in einer gegenüberliegenden Seite des Beschlages aufweist.

30. System nach einem der vorhergehenden Ansprüche,
**dadurch gekennzeichnet, dass** Abmessungen der Transportelemente und/oder der Fahrzeuge und/oder von Elementen des Systems ISO-genormt sind.

31. Verriegelungsvorrichtung, die für ein Verriegelungssystem eines Transportsystems zum lösbaren Befestigen von geometrisch verschieden standardisierten Transportelementen, insbesondere von Containern, auf einem Ladechassis von Fahrzeugen, insbesondere auf LKW, an dem Ladechassis so angebracht ist, dass sie zusammen mit weiteren Verriegelungsvorrichtungen zum Bilden einer formschlüssigen Verbindung mit Halterungsprofilen im Bereich der Unterseite von Transportelementen zusammenwirkt,
**dadurch gekennzeichnet, dass** die Verriegelungsvorrichtung mindestens ein erstes Riegelelement mit einem horizontal in seiner Längsrichtung verschieblichen ersten Bolzen aufweist, sowie mindestens ein zweites Riegelelement mit einem um seine vertikale Achse verdrehbaren und oberhalb des Bolzens angeordneten Bajonettzapfen, die'jeweils zum Herstellen der formschlüssigen Verbindung zwischen einer Verriegelungsposition und einer Freigabeposition bewegbar sind.

32. Vorrichtung nach Anspruch 31,
**dadurch gekennzeichnet, dass** die Riegelelemente mittels eines gemeinsamen Antriebs betätigbar sind.

33. Vorrichtung nach Anspruch 32,
**dadurch gekennzeichnet, dass** der Antrieb einen Handhebel aufweist.

34. Vorrichtung nach einem der Ansprüche 32 oder 33,
**dadurch gekennzeichnet, dass** der Antrieb pneumatisch ist.

35. Vorrichtung nach einem der Ansprüche 31 bis 34,
**dadurch gekennzeichnet, dass** die Verriegelungsvorrichtung ein drittes Riegelelement aufweist in Gestalt eines horizontal in seiner Längsrichtung verschieblichen Bolzens.

36. Vorrichtung nach Anspruch 35,
**dadurch gekennzeichnet, dass** die Bolzen in ihren Längsrichtungen parallel zueinander verlaufen.

37. Vorrichtung nach einem der Ansprüche 35 oder 36,
**dadurch gekennzeichnet, dass** die Bolzen sich gleichzeitig in eine Freigabeposition in ein Gehäuse einfahren lassen.

38. Vorrichtung nach einem der Ansprüche 32 bis 37,
**dadurch gekennzeichnet, dass** die Bolzen und der Bajonettzapfen mittels eines T-förmigen Hebels betätigbar sind, dessen Querbalkenenden an den Bolzen angelenkt sind und an dessen Längsbalken der Antrieb ansetzt.

39. Transportelement, insbesondere Container, zum lösbaren Befestigen auf einem Ladechassis von Fahrzeugen, insbesondere auf LKW, mittels eines Verriegelungssystems mit Verriegelungsvorrichtungen, die an dem Ladechassis so angebracht sind, dass sie zum Bilden einer formschlüssigen Verbindung mit Halterungsprofilen im Bereich der Unterseite des Transportelementes zusammenwirken mit einer länglichen, tunnelartigen, geometrisch standardisierten Ausnehmung, insbesondere einem Goose-Neck-Tunnel, in der Unterseite,
**dadurch gekennzeichnet, dass** mindestens ein Halterungsprofil im Bereich der tunnelartigen Ausnehmung angeordnet ist.

40. Transportelement nach Anspruch 39,
**dadurch gekennzeichnet, dass** das Halterungsprofil im Bereich der tunnelartigen Ausnehmung mindestens eine horizontale Bohrung aufweist.

41. Transportelement nach einem der Ansprüche 39 oder 40,
**dadurch gekennzeichnet, dass** die Bohrung quer zur Längsrichtung des Tunnels verläuft.

42. Transportelement nach einem der Ansprüche 39 bis 41,
**dadurch gekennzeichnet, dass** das Halterungsprofil in einer Verstärkung derTunnelwandung ausgebildet ist.

43. Transportelement nach einem der Ansprüche 39 bis 42,
**dadurch gekennzeichnet, dass** das Halterungsprofil in einem vorgefertigten Beschlag ausgebildet ist.

44. Transportelement nach Anspruch 43,
**dadurch gekennzeichnet, dass** der Beschlag für eine Ecke zwischen der Unterseite und einer Stirnseite des Transportelementes sowie einer Tunnelseitenwand an einem in der Stirnseite ausgebildeten Eingang des Tunnels ausgebildet ist.

45. Transportelement nach Anspruch 44,
**dadurch gekennzeichnet, dass** der Eckbeschlag ein stirnseitiges Halterungsprofil, insbesondere eine Bohrung, in Längsrichtung des Tunnels aufweist.

46. Transportelement nach einem der Ansprüche 39 bis 45,
**dadurch gekennzeichnet, dass** Abmessungen desTransportelementes ISO-genormt sind.

47. Beschlagelement für ein Transportelement, insbesondere einen Container, mit einer länglichen, tunnelartigen, geometrisch standardisierten Ausnehmung, insbesondere einen Schwanenhals-Tunnel, in der Unterseite, zum lösbaren Befestigen des Transportelementes auf einem Ladechassis von Fahrzeugen, insbesondere auf LKW, mittels eines Verriegelungssystems mit Verriegelungsvorrichtungen, die an dem Ladechassis so angebracht sind, dass sie zum Bilden einer formschlüssigen Verbindung mit Halterungsprofilen im Bereich der Unterseite des Transportelementes zusammenwirken,
**dadurch gekennzeichnet, dass** das Beschlagelement mindestens ein Halterungsprofil aufweist und eingerichtet ist zur Befestigung im Bereich der tunnelartigen Ausnehmung.

48. Beschlagelement nach Anspruch 41,
**dadurch gekennzeichnet, dass** mindestens ein Halterungsprofil als Bohrung ausgebildet ist.

49. Beschlagelement nach Anspruch 42,
**dadurch gekennzeichnet, dass** der Beschlag für eine Ecke zwischen der Unterseite und einer Stirnseite des Transportelementes sowie einer Tunnelseitenwand an einem Eingang des Tunnels ausgebildet ist mit einer stirnseitigen Bohrung in Längsrichtung des Tunnels.

50. Beschlagelement nach Anspruch 43,
**dadurch gekennzeichnet, dass** der Eckbeschlag eine mit der stirnseitigen Bohrung fluchtende zweite Bohrung in Längsrichtung des Tunnels in einer gegenüberliegenden Seite des Beschlages aufweist.

51. Beschlagelement nach einem der Ansprüche 41 bis 44,
**dadurch gekennzeichnet, dass** Abmessungen des Beschlagelementes ISO-genormt sind.
